# EUROPÄISCHE PATENTSCHRIFT

(11) **EP 1 801 011 B1**
(45) Veröffentlichungstag und Bekanntmachung des Hinweises auf die Patenterteilung: **19.03.2008**
(21) Anmeldenummer: 06020653.9
(22) Anmeldetag: 30.09.2006
(51) Int. Cl.: B64G 1/40, F02K 9/50, F17C 13/00

(54) **Treibstofftank**
Propellant tank
Réservoir de carburant

(30) Priorität: 22.12.2005 DE 102005062092
(43) Veröffentlichungstag der Anmeldung: 27.06.2007
(73) Patentinhaber: Astrium GmbH, 85521 Ottobrunn (DE)
(72) Erfinder: Behruzi, Kei Philipp, Dr., 28209 Bremen (DE); Michaelis, Mark, Dr., 28203 Bremen (DE)
(74) Vertreter: Hansmann, Dierk

(56) Entgegenhaltungen:
- EP-A1- 0 367 001
- EP-A2- 0 250 084
- DE-A1- 10 040 755

## Beschreibung

Die Erfindung betrifft einen Treibstofftank, insbesondere einen Tank zur Lagerung aggressiver Flüssigkeiten zum Betrieb von Raumflugkörpern, mit einem als Fördermedium dienenden Treibgas sowie mit wenigstens einer Treibstoffentnahmevorrichtung, bestehend aus wenigstens je einem Sammelbehälter und einem Tankauslaß, bei der unter Ausnutzung der Oberflächenspannung eine Separation des Treibstoffs vom Treibgas herbeigeführt wird, wobei die Entnahmevorrichtung in Form eines wiederbefüllbaren Reservoirs am Boden des Treibstofftanks angeordnet und über Förderleitungen mit dem Inneren des Treibstofftanks verbunden ist.

Bei Raumflugkörpern, wie Satelliten oder Orbitalstationen, werden sowohl für die Triebwerke, die der Lageregelung im All dienen, als auch für Triebwerke zur Durchführung des Apogäummanövers überwiegend flüssige Treibstoffe verwendet, die in hierfür geeigneten Behältern mitgeführt und aus diesen in der Regel unter Verwendung eines Treibgases in die Brenn- bzw. Reaktionskammern der entsprechenden Triebwerke gefördert werden. Als Treibgase werden üblicherweise Inertgase wie Helium (He) oder Stickstoff (N₂) eingesetzt, die unter Druck in den Treibstoffbehälter gepreßt werden und die dadurch den Treibstoff in das zum jeweiligen Triebwerk führende Rohrleitungssystem pressen. Wichtig ist dabei eine vollständige und sichere Trennung zwischen dem als Fördermedium dienenden Treibgas und dem in das Triebwerk gelangenden Treibstoff, da letzterer bei Zündung unbedingt frei von Fremdgaseinlagerungen sein muß. Ein auf diesem Prinzip basierender Tank der eingangs genannten Art ist aus der DE 100 40 755 C2 bekannt geworden.

Eine Standardmethode, Flüssigkeiten und Gase voneinander zu trennen, besteht in der Verwendung von Sieben, die bis zu einer bestimmten Druckdifferenz gegen den Durchsatz von Gasen sperren. Bei kleineren Satelliten mit geringem Treibstoffförderstrom kann jedoch unter bestimmten Umständen auf diese vergleichsweise kostspieligen Siebe verzichtet werden. Eine besondere und häufige Anforderung an derartige Tanks ist zudem die Möglichkeit eines horizontalen Transports des bereits befüllten Treibstofftanks, integriert in den Satelliten, zum Startplatz, insbesondere dann, wenn keine Beschränkungen hinsichtlich des Tankfüllgrades erwünscht sind. Die während des Transportes auftretenden Kräfte können aufgrund dynamischer Effekte die Kräfte durch die Erdgravitation um ein Vielfaches überschreiten. Bei den bisher bekannten Tanks dieser Art ist deshalb entweder der Tankfüllgrad zu kleineren Füllgraden hin beschränkt, so daß der Tankauslaß stets mit Flüssigkeit umgeben ist, oder aber der Tankauslaß ist durch einen sehr engen Kanal eingeschränkt, der jedoch relativ hohe Druckverluste bei der Treibstoffentnahme erzeugt. Die dabei maximal zulässigen Druckverluste werden üblicherweise vorgegeben.

Eine weitere Anforderung an einen solchen Tank ist die Möglichkeit, daß Satelliten, die derartige Tanks enthalten, mit einer Ausrichtung quer zum Tankauslaß in den Orbit befördert werden sollen. Diese Möglichkeit ergibt sich insbesondere bei der Beförderung mehrerer kleiner Satelliten, die auf einer zentralen Trägerstruktur seitlich horizontal angebracht sind. Die beim Raketenstart auftretenden hohen dynamischen Lasten haben zur Folge, daß frei liegende Siebe und Öffnungen in der Regel kein Haltevermögen mehr aufweisen, d.h., daß ein Eintreten von Treibgas in den Auslaß nicht unterbunden werden kann. Dies führt zu einem Versagen, wenn der Treibstofftank nicht vollständig gefüllt wird und sensible Bauteile wie Siebe und Öffnungen aus der Flüssigkeit herausragen. Treibgas kann dann bei hohen Belastungen durch die Siebe und Öffnungen zum Tankauslaß gelangen, was ebenfalls zu einem Versagen des Triebwerks führen kann. Ein Raketenstart mit horizontal ausgerichtetem Tank ist daher mit den bisher bekannten Tanks der eingangs genannten Art nicht möglich.

Ferner sind aus der EP 0 367 001 B1 und der DE 37 50 727 T2 Treibstofftanks bekannt, wobei je Sammelbehälter und Tankauslaß unter Ausnutzung der Oberflächenspannung eine Separation von Treibstoff und Treibgas herbeigeführt wird und eine Entnahmevorrichtung am Boden des Treibstofftanks angeordnet ist. Hierbei besteht der Mangel, daß bei kleinen Treibstofffüllständen im Tank und bei horizontaler Ausrichtung unter verschiedenen Drehwinkeln bei Transport und/oder Start an Auslaßbohrungen keine Treibstoffmenge garantiert wird, um einen Gaszufluß in die Auslaßbohrungen zu verhindern.

Aufgabe der Erfindung ist es, einen Tank gemäß dem Oberbegriff so auszubilden, daß ein Start auch mit horizontal ausgerichtetem Satellitentank in verschiedenen Ausrichtungen des Tanks und bei gleichzeitig geringen Flüssigkeitsfüllständen durchgeführt werden kann. Zugleich soll sich dieser Tank in horizontaler Lage ohne Einschränkungen hinsichtlich seiner Orientierung und seines Füllgrades transportieren lassen, wobei dennoch in dem sich an den Start anschließenden Orbitbetrieb ein blasenfreies Fördern des Treibstoffs zu den Triebwerken gewährleistet sein soll.

Die Erfindung löst diese Aufgabe dadurch, daß bei einem derartigen Tank der Tankauslaß mit Verbindungs- oder Öffnungskanälen sowie mit einem schneckenförmigen Kanal versehen ist, die den Sammelbehälter mit einem Auslaßrohr des Auslasses verbinden.

Durch die erfindungsgemäße Ausbildung des Treibstofftanks ist gewährleistet, daß auch bei kleinen Treibstofffüllständen im Tank und bei horizontaler Ausrichtung des Tanks unter verschiedensten Orientierungen, d.h. Drehwinkeln um die Längsachse, bei Transport und/oder Start stets eine gewisse Treibstoffmenge an den Auslaßbohrungen gehalten wird und somit kein Gas in die Auslaßbohrungen eindringen kann. Dies wird durch die erfindungsgemäß vorgesehene labyrinthartige Ausgestaltung des Inneren des Treibstoffauslasses gewährleistet. Ein blasenfreies Fördern von Treibstoff im anschließenden Orbitbetrieb wird dadurch sichergestellt, daß das Innere des Treibstoffauslasses sich unter Ausnutzung von Kapillarkräften unter Schwerelosigkeit nach der Startphase innerhalb kürzester Zeit, d.h. innerhalb weniger Sekunden, immer vollständig füllt. Nach diesem Füllvorgang ist der Tank betriebsbereit.

Die Herstellungskosten für den Tank nach der Erfindung sind gegenüber denen herkömmlicher Tanks praktisch nicht erhöht, so daß bei gleich bleibenden Kosten eine erhebliche Steigerung der Flexibilität hinsichtlich der Handhabung am Boden und während des Raketenstarts erzielbar ist. Dabei ist der Treibstofftank gemäß der Erfindung zugleich so ausgelegt, daß er ohne Siebe eine sichere und blasenfreie Förderung ermöglicht.

Nachfolgend soll der erfindungsgemäße Treibstofftank anhand eines in der Zeichnung dargestellten Ausführungsbeispiels näher erläutert werden. Es zeigen:
- Fig. 1: eine perspektivische Darstellung eines Treibstofftanks,
- Fig. 2: eine Detaildarstellung des Treibstofftanks gemäß Fig. 1 im Bereich des Tankauslasses,
- Fig. 3: einen Schnitt entlang III-III in Fig. 2,
- Fig. 4: einen vertikalen Schnitt im Bereich der Längsachse durch den Treibstofftank gemäß Fig. 1, der in diesem Fall für einen Start in horizontaler Position angeordnet ist, und
- Fig. 5 bis 8: Darstellungen entsprechend derjenigen in Fig. 3 bei verschiedenen Orientierungen, wobei jeweils die enthaltene Restflüssigkeit mit angedeutet ist.

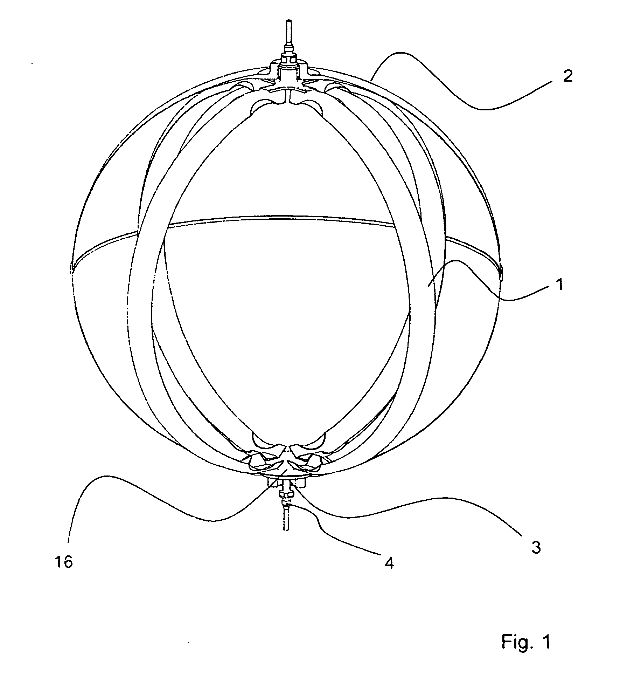

Bei dem in Fig. 1 dargestellten Treibstofftank handelt es sich um einen Oberflächenspannungstank für die Aufnahme und Lagerung von aggressiven lagerfähigen Treibstoffen, wie MMH, N₂O₄ und Hydrazin, mit einer am Tankboden angeordneten Treibstoffentnahmevorrichtung, bei der unter Ausnutzung der Oberflächenspannung eine Separation des Treibstoffs vom Treibgas herbeigeführt wird. Bei dem Tank sind vier Leitbleche 1 entlang der Tankwand 2 geführt und münden in einen durch eine Abdeckplatte 16 bedeckten Sammelbehälter 3 am Boden des Treibstofftanks. Über einen Tankauslaß 4 läßt sich der Treibstoff aus diesem Behälter 3 durch ein Treibgas zu einer in der Zeichnung nicht dargestellten Brenn- bzw. Reaktionskammer austreiben. Als Treibgas werden dabei üblicherweise die Inertgase Helium (He) oder Stickstoff (N₂) eingesetzt, die den Treibstoff in das zum jeweiligen Triebwerk führende, in der Figur nicht dargestellte Rohrleitungssystem pressen.

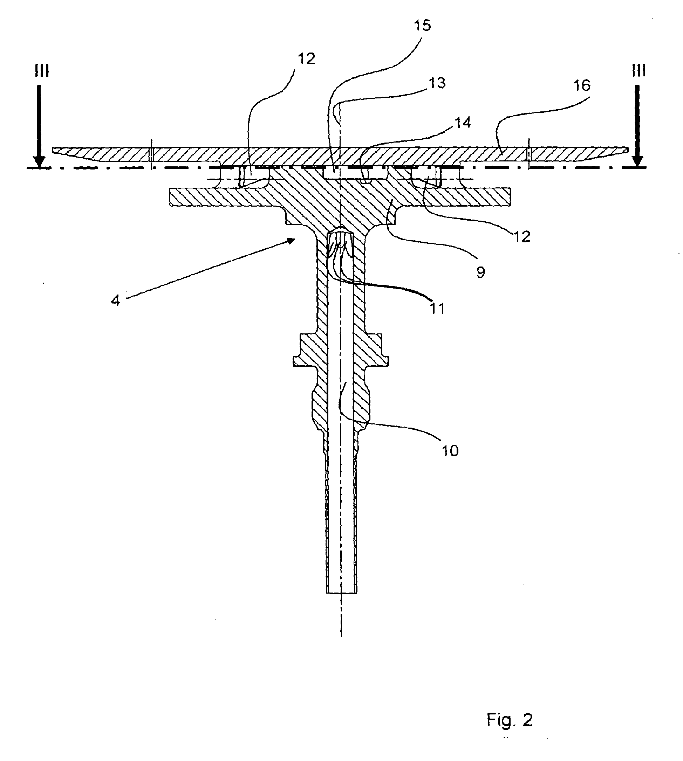

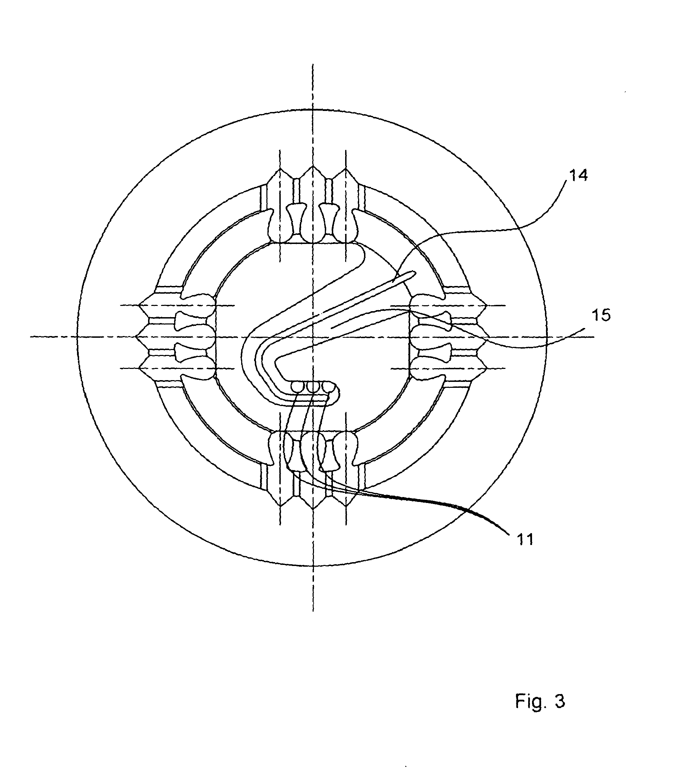

Wie die Schnittdarstellung gemäß Fig. 2 zeigt, ist der untere Teil 9 des Sammelbehälters 3 am Tankauslaß 4 als Drehteil ausgeführt, wodurch insbesondere die Herstellungskosten gering gehalten werden können. Gemäß den Figuren 2 und 3 verbinden ein schneckenförmig gewundener Kanal 15 sowie mehrere, im Fall des hier dargestellten Ausführungsbeispiels drei Verbindungs-oder Öffnungskanäle 11 mit einem Durchmesser von jeweils etwa 2 mm das Innere des Sammelbehälters 3, das von einem ringförmigen Kanal 12 gebildet wird, mit einem zentral angeordneten Auslaßrohr 10. Die Verbindungs- oder Öffnungskanäle 11 im Tankauslaß sind dabei derart geneigt angeordnet, daß während der Erstbefüllung des Tanks mit Treibstoff keine Treibgasblasen eingeschlossen werden.

Der Innenraum des Sammelbehälters 12 ist in seiner Geometrie so ausgebildet, daß sich dieser sowohl beim Drehen des Tanks von der horizontalen in die vertikale Position, z.B. nach einem horizontalem Transport mit geringen Tankfüllgraden, als auch in schwerelosem Zustand infolge der Kapillarwirkung wieder von selbst vollständig und blasenfrei füllt. Das Befüllen des schneckenförmig gewundenen Kanals 15 wird durch eine zusätzlich mittig eingebrachte Nut 14 unterstützt. Der Kanal 15 wird in Richtung des ringförmigen Kanals 12 immer breiter, so daß Blasen in Richtung des ringförmigen Kanals 12 ausgetrieben werden. Die eingeschnittene Nut 14 unterstützt das Befüllen des schneckenförmigen Kanals 15.

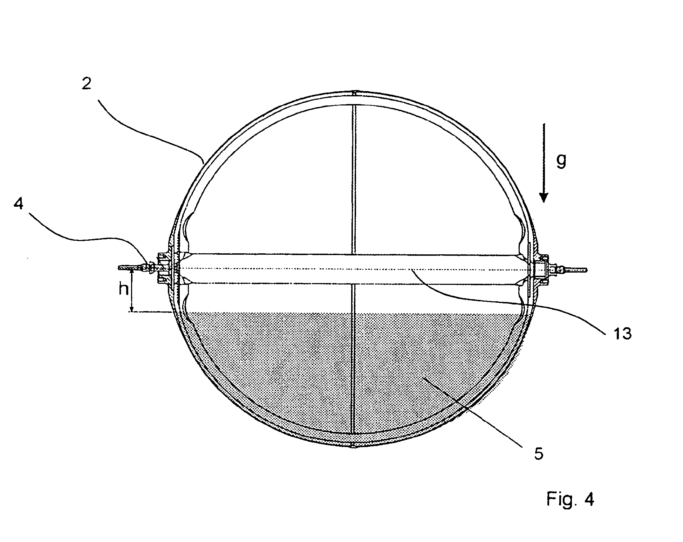

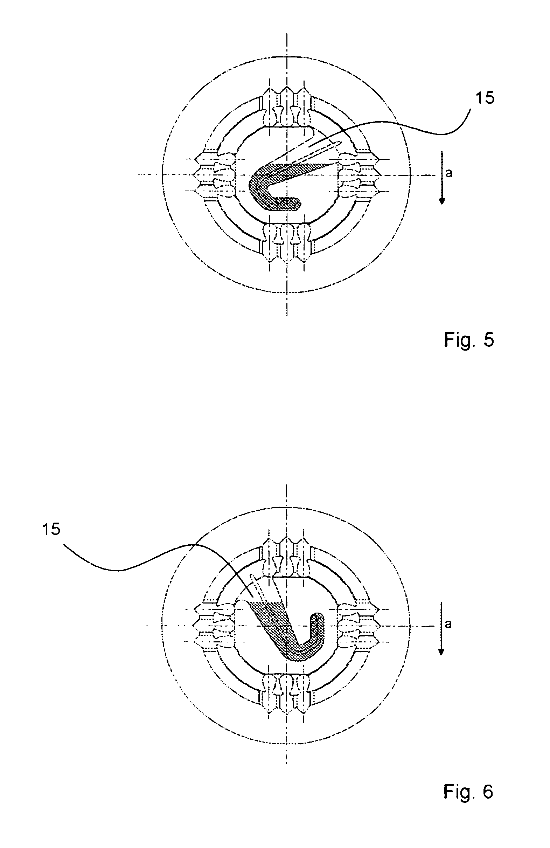

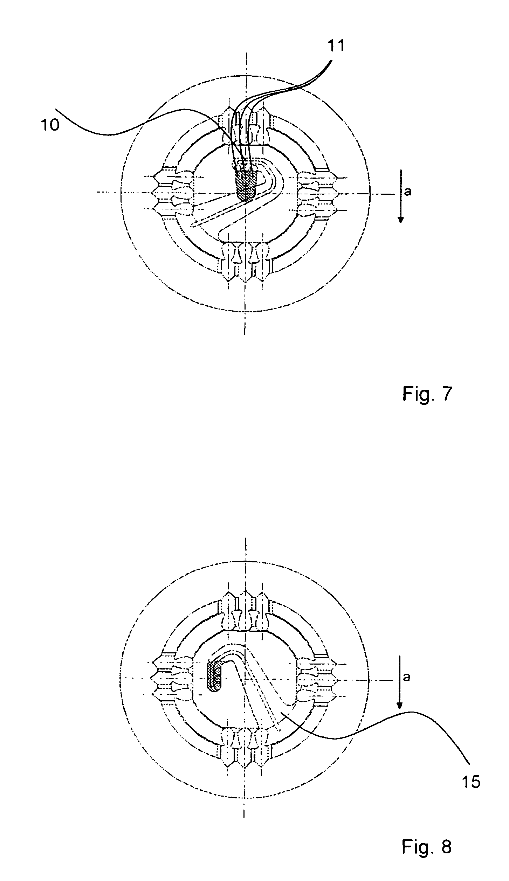

Eine Befüllung des Tanks mit Treibstoff erfolgt meist bei vertikal ausgerichtetem Tank, d.h., die Längsachse 13 des Tanks verläuft in diesem Fall parallel zur Richtung der Erdgravitation, wobei der gesamte Tankauslaß 4 sowie der Sammelbehälter 3 vollständig mit Treibstoff gefüllt sind. Wird der Treibstofftank anschließend so um die Tankquerachse gekippt, daß er sich in der horizontalen Lage befindet, in der der Treibstoff 5 bei geringen Füllgraden, wie in Fig. 4 dargestellt, nicht mehr den Auslaß 4 benetzt, sondern sein Niveau im Abstand h unterhalb dieses Auslasses 4 liegt, dann bewirkt die schneckenförmige Ausbildung des Kanals 15, daß Flüssigkeit weder bei Horizontaltransport noch bei horizontalem Start aus dem Auslaßrohr 10 zurück in den Treibstofftank gelangen kann. In den Figuren 5 bis 8 ist der untere Teil des Sammelbehälters ohne die obere Abdeckplatte 16 bei unterschiedlichen Orientierungen des Tanks dargestellt. Die Kombination der Kanäle 11 und 15 sorgt in jedem Fall dafür, daß sich das Auslaßrohr 10 nicht entleeren kann. Ein Kippen des Tanks aus der Vertikalen in die horizontale Lage ist in jeder Richtung möglich.

Die Verwendung mehrerer Verbindungs- oder Öffnungskanäle 11 im Auslaß führt zusätzlich zu einem im Vergleich zu den bislang bekannten Tanks dieser Art erheblich verminderten Druckverlust am Tankauslaß 4 während des Austreibens von Treibstoff. Die Ausgestaltung des Auslasses entsprechend der Erfindung erlaubt neben den erweiterten Anwendungsgebieten hinsichtlich eines horizontalen Transportes und horizontalen Starts auch eine größere Reserve bezüglich der maximal tolerierbaren Druckverluste sowie ein schnelleres Befüllen und Entleeren des Tanks am Boden.

## Patentansprüche

1. Treibstofftank, insbesondere Tank zur Lagerung aggressiver Flüssigkeiten zum Betrieb von Raumflugkörpern, mit einem als Fördermedium dienenden Treibgas sowie mit wenigstens einer Treibstoffentnahmevorrichtung, bestehend aus wenigstens je einem Sammelbehälter (3) und einem Tankauslaß (4), bei der unter Ausnutzung der Oberflächenspannung eine Separation des Treibstoffs vom Treibgas herbeigeführt wird, wobei die Entnahmevorrichtung in Form eines wiederbefüllbaren Reservoirs am Boden des Treibstofftanks angeordnet und über Förderleitungen (15) mit dem Inneren des Treibstofftanks verbunden ist, **dadurch gekennzeichnet, daß** der Tankauslaß mit Verbindungs- oder Öffnungskanälen (11) sowie mit einem schneckenförmig ausgebildeten Kanal (15) versehen ist, die den Sammelbehälter (3) mit einem Auslaßrohr (10) des Auslasses (4) verbinden.

2. Treibstofftank gemäß Anspruch 1, **dadurch gekennzeichnet, daß** sich der Kanal (15) in Richtung auf die Verbindungs- oder Öffnungskanäle (11) verjüngt.

3. Treibstofftank gemäß Anspruch 1 oder 2, **dadurch gekennzeichnet, daß** der Kanal (15) zusätzlich mit einer Nut (14) versehen ist.

4. Treibstofftank gemäß einem der Ansprüche 1 bis 3, **dadurch gekennzeichnet, daß** das Innere des Sammelbehälters (3) als ringförmiger Kanal (12) ausgebildet ist.

## Claims

1. Fuel tank, in particular a tank for storing aggressive liquids for the operation of space vehicles, with a propellant gas serving as conveying medium as well as at least one fuel withdrawal device, the or each fuel withdrawal device consisting of at least one collecting vessel (3) and a tank outlet(4), in which by utilising the surface tension a separation of the fuel from the propellant gas is achieved, wherein the withdrawal device is arranged in the form of a refillable reservoir on the floor of the fuel tank and is connected via conveying lines (15) to the interior of the fuel tank, **characterised in that** the tank outlet is provided with connecting or opening channels (11) and also with a screw-shaped channel (15), which connect the collecting vessel (3) to an outlet pipe (10) of the outlet (4).

2. Fuel tank according to claim 1, **characterised in that** the channel (15) tapers in the direction of the connecting channels or opening channels (11).

3. Fuel tank according to one of claim 1 or 2, **characterised in that** the channel (15) is additionally provided with a groove (14).

4. Fuel tank according to one of claims 1 to 3, **characterised in that** the interior of the collecting vessel (3) is formed as an annular channel (12).

## Revendications

1. Réservoir de carburant, en particulier réservoir pour stocker des liquides agressifs pour faire fonctionner un engin spatial, avec un gaz propulseur servant de moyen de transport et avec au moins un dispositif de prélèvement de carburant constitué d'au moins un conteneur collecteur (3) et d'une sortie de réservoir (4), dans lequel une séparation du carburant du gaz propulseur est effectuée en utilisant la tension superficielle, le dispositif de prélèvement sous la forme d'un réservoir re-remplissable étant disposé sur le fond du réservoir de carburant et étant relié par des conduites de transport (15) à l'espace intérieur du réservoir de carburant, **caractérisé en ce que** la sortie du réservoir est pourvue de canaux de liaison ou d'ouverture (11) ainsi que d'un canal hélicoïdal (15) qui relie le conteneur collecteur (3) à un conduit de sortie (10) de la sortie (4).

2. Réservoir de carburant selon la revendication 1, **caractérisé en ce que** le canal (15) se rétrécit en direction des canaux de liaison ou d'ouverture (11).

3. Réservoir de carburant selon la revendication 1 ou 2, **caractérisé en ce que** le canal (15) est en outre pourvu d'une rainure (14).

4. Réservoir de carburant selon l'une des revendications 1 à 3, **caractérisé en ce que** l'espace intérieur du conteneur collecteur (3) est configuré comme un canal annulaire (12).
